# NEUE EUROPÄISCHE PATENTSCHRIFT

(11) **EP 1 439 155 B2**
(45) Veröffentlichungstag und Bekanntmachung des Hinweises auf die Entscheidung über den Einspruch: **22.06.2016**
(45) Hinweis auf die Patenterteilung: 21.08.2013
(21) Anmeldenummer: 03024722.5
(22) Anmeldetag: 29.10.2003
(51) Int. Cl.: C04B 40/06, C04B 26/14

(54) **Verwendung eines Reaktionsharzmörtes für Zeikomponentensysteme**
Use of a reaction-resin mortar for two-component systems
Utilisation d'un mortier de résine composite pour systèmes à deux composants

(30) Priorität: 24.12.2002 DE 10260974
(43) Veröffentlichungstag der Anmeldung: 21.07.2004
(73) Patentinhaber: fischerwerke GmbH & Co. KG, 72178 Waldachtal (DE)
(72) Erfinder: Vogel, Martin, Dr., 79286 Glottertal (DE); Grün, Jürgen, 79268 Bötzingen (DE); Schätzle, Joachim, Dr., 79341 Kenzingen (DE); Jakob, Rainer, 79111 Freiburg (DE)
(74) Vertreter: Maucher Börjes Jenkins Patent- und Rechtsanwälte

(56) Entgegenhaltungen:
- EP-A2- 0 290 881
- EP-A2- 0 290 881
- EP-A2- 0 338 983
- EP-B1- 0 509 356
- WO-A1-94/14865
- WO-A1-02/079293
- WO-A1-02/079341
- DE-A1- 2 546 181
- DE-A1- 3 036 693
- DE-A1- 4 039 151
- DE-A1- 4 039 151
- DE-A1- 19 744 951
- DE-C2- 4 134 550
- GB-A- 1 204 760
- GB-A- 1 204 760
- JP-A- 1 234 432
- JP-A- 7 048 997
- JP-A- 8 312 299
- JP-A- S5 160 256
- JP-A- S61 243 868

## Beschreibung

### Zusammenfassung der Erfindung

Die Erfindung betrifft die Verwendung eines Reaktionsharzmörtels für Mehrkomponentensysteme als Befestigungsmittel zur Befestigung von Verankerungsmitteln in Löchern, wie Bohrlöchern, wobei der Reaktionsmörtel bei der Mischung der Komponenten durch vorhandene organische Bestandteile, die durch Gasbildung zu einem Aufschäumen führen, aufgeschäumt wird, wie in den Ansprüchen definiert.

### Hintergrund der Erfindung

DE 30 366 93 betrifft Filtermaterialien, bei denen aufschäumende Polyurethanschäume mit Epoxyharzen gehärtet werden. EP 0 338 983 und JP 01-234432 erwähnen niedrig siedende Treibmittel als Schaumbildner. JP 08-312299 und JP 07-048997 erwähnen Massen zur Gesteinsverfestigung auf Basis aufschäumender Polyurethanmischungen. WO 02/089341 offenbart Mehrkomponentenkits zur Verwendung in der Befestigungstechnik.

Bekannt sind Zweikomponentensysteme beispielsweise mit härtbaren Harzen als einer Komponente und Härtern (Initiatoren) als zweiter Komponente, wobei die Komponenten räumlich getrennt in Zweikammersystemen mit leicht zerstörbaren Außenwandungen oder in Doppelkartuschen vorliegen. Durch Mischung am Ort, an dem die Verankerung erfolgen soll, beispielsweise einem Bohrloch, im ersten Fall unter Zerstören der Außenwandungen, im zweiten Fall z.B. unter Verwendung von sogenannten Statikmischern, werden die Komponenten miteinander in Berührung gebracht und vermischt und der so gebildete Mörtel zur Aushärtung gebracht.

Beim Befestigen von Verankerungsmitteln, wie Ankerstangen, Bolzen oder dergleichen, in Löchern, z.B. Bohrlöchern, in Kunststoff oder Holz, oder vor allem in Aufnahmewerkstoffen, wie Mauerwerk, Platten, Pfeilern oder dergleichen, kann insbesondere bei porösen derartigen Aufnahmestoffen oder solchen mit Hohlräumen oder Kammern, wie Hohlblocksteinen, oder bei ausgeschlagenen Bohrlöchern die Problematik bestehen, dass sehr große Harzmengen nötig sein können, um die Hohlräume wenigstens so weit auszufüllen, dass eine ausreichende Befestigung der Verankerungsmittel möglich ist.

Um diesem Problem zu begegnen, schlägt die europäische Patentanmeldung EP 0 338 983 vor, durch ein in den Reaktionskomponenten vorliegendes Gemisch von (getrennt oder in trockenem Zustand vorliegenden) Polycarbonsäuren und anorganischem Carbonat bei Mischung für ein Aufschäumen zu sorgen, das dazu führt, dass vorhandene Hohlräume mit weniger Materialaufwand wirksam wenigstens teilweise gefüllt werden und so verbesserter Halt für die Verankerungsmittel gewährleistet wird. So werden beispielsweise hinter zur Öffnungsseite eines Bohrloches vorliegenden Wandungen von Hohlräumen durch das Aufschäumen Auswölbungen des (gegebenenfalls auch in Hüllen vorliegenden) Harzes gebildet, die durch Hinterkantung für mehr Halt sorgen.

Nachteilig an diesen Systemen ist, dass die Reaktion der Säure mit dem anorganischen Carbonat, die zur Freisetzung von Kohlendioxid und damit zum Aufschäumen führt, unmittelbar nach dem Mischen der beiden Komponenten beginnt (beispielsweise bereits im Statikmischer) und es so zu Schwierigkeiten bei der Verwendung kommen kann. Dem kann allenfalls durch eine ausreichend grobe Körnung des anorganischen Carbonats begegnet werden, was wiederum die Verarbeitbarkeit des Harzes beeinträchtigt.

Auch ist die erforderliche Azidität der Polycarbonsäuren unter Umständen für die Materialien, in denen das Harz für Befestigung sorgen soll, nachteilig, insbesondere natürlich bei der Befestigung in säureempfindlichen, beispielsweise kalkhaltigen, Steinmaterialien.

Aufgabe der vorliegenden Erfindung ist, alternative aufschäumbare Harze zur Verfügung zu stellen, bei denen diese und weitere Nachteile vermieden werden können.

### Allgemeine Beschreibung der Erfindung

Dies wird erfindungsgemäß erreicht, indem man anstelle von anorganischem Carbonat eine oder mehrere organische Bestandteile zum Einsatz bringt, welche nach dem Mischen durch Gasbildung zu einem Aufschäumen führen.

Die Erfindung betrifft somit die Verwendung eines aufschäumbaren Mehr-, insbesondere Zwei-Komponenten-Reaktionsmörtels, wie in Anspruch 1 definiert, wobei der Reaktionsmörtel durch die Anwesenheit einer oder mehrerer gasbildender organischer Bestandteile in einer oder mehrerer der Komponenten gekennzeichnet ist.

Hierbei umfasst eine der Komponenten Wasser (Komponente B oder eine weitere Komponente), während in einer anderen Komponente (Komponente A) als gasbildender organischer Bestandteil ein organisches Isocyanat vorliegt, was bei Mischung zur Freisetzung von Kohlendioxid führt, welches das gewünschte Aufschäumen bewirkt.

Die Nutzung der organischen gasbildenden Verbindungen hat den Vorteil, dass diese molekulardispers vorliegen können und so zu einer sehr feinen Blasenbildung führen, was eine homogenere und festere Beschaffenheit der entstehenden Schäume bewirkt (so liegen beispielsweise keine Nester von aus Metallcarbonatkörnern gebildeten Metallsalzen vor). Darüber hinaus kann durch Zugabe geeigneter Inhibitoren oder einfach durch die aufgrund geeignet ausgewählter organischer gasbildender Verbindungen die Gasbildung zeitlich so gesteuert werden, dass die oben genannten Probleme der frühzeitigen Reaktion oder der Notwendigkeit der Verwendung grobkörniger Materialien mit den resultierenden Nachteilen vermieden werden können.

### Detaillierte Beschreibung der Erfindung

Ein erfindungsgemäß verwendbarer Mehr-, insbesondere Zwei-Komponenten-Reaktionsmörtel, umfasst insbesondere
- eine Komponente A, welche ein Epoxidharz und
- eine Komponente B, welche eine mindestens zwei funktionelle Gruppen ausgewählt aus Hydroxy, Amino und Mercapto tragende organische Verbindung, insbesondere ein Di- oder Polyamin und/oder ein Di- oder Polythiol, beinhaltet
   wobei separat oder in einer der genannten Komponenten ein oder mehrere Härter vorliegen, wobei der Härter in Falle des Vorliegens in einer Komponente mit härtbaren Bestandteilen in verkapselter Form vorliegt,
mit der Maßgabe, dass im Falle des Vorliegens des Epoxidharzes in Komponente A in Komponente B eine mindestens zwei funktionelle Gruppen ausgewählt aus Hydroxy, Amino und Mercapto tragende organische Verbindung, vorzugsweise ein Di- oder Polyamin und/oder ein Di- oder Polythiol, vorliegen muss, wobei in Komponente A als organischer gasbildender Bestandteil ein organisches Isocyanat vorliegt und in Komponente B (oder, falls vorhanden, in einer weiteren Komponente) Wasser vorhanden ist.

Daneben können weitere Zusatzstoffe in den Komponenten vorliegen.

Eine bevorzugte Variante der Erfindung betrifft die Verwendung eines Zwei-Komponenten-Reaktionsmörtels, bei dem folgende Komponenten vorliegen:
- eine Komponente A**, welche ein Epoxidharz umfasst, und
- eine Komponente B**, welche ein Di- oder Polyamin und/oder ein Di- oder Polythiol umfasst,
wobei
in Komponente A** ein organisches Diisocyanat und in Komponente B** Wasser vorliegt. Daneben können weitere Zusatzstoffe vorliegen.

Die im Rahmen der vorliegenden Offenbarung verwendeten allgemeinen Ausdrücke und Definitionen haben vorzugsweise die nachstehend genannten Bedeutungen, wobei vor- und nachstehend die spezifischeren Bedeutungen an Stelle der allgemeineren Ausdrücke und Definitionen eingesetzt und die genannten Angaben für Anteile (in Gew.-%) verwendet werden können, was zu bevorzugten Ausführungsformen der Erfindung führt:

Die Gewichtsverhältnisse der Komponenten A : B bzw. A** zu B** liegen vorzugsweise im Bereich von 100: 1 bis 1 : 100, vorzugsweise von 10:1 bis 1:10, vorzugsweise von 5:1 bis 1:5. Vorzugsweise sind nur die beiden Komponenten A und B bzw.

A** und B** Bestandteil des bevorzugten Zweikomponentensystems.

Mindestens zwei funktionelle Gruppen ausgewählt aus Hydroxy, Amino und Mercapto tragende organische Verbindungen sind insbesondere die in WO 02/079341 und WO 02/079293, welche hier diesbezüglich (insbesondere bezüglich der unten spezifisch erwähnten Verbindungen) durch Bezugnahme aufgenommen werden, genannten, beispielsweise Di- oder Polyole, Di- oder Polyamine und/oder Di- oder Polythiole. Diese Verbindungen liegen, falls vorhanden, vorzugsweise in Mengen von bis zu 95 Gew.-%, vorzugsweise von 20 bis 70 Gew.-%, bezogen auf die jeweilige Komponente vor.

Di- oder Polyole sind insbesondere di- oder höherfunktionale Alkohole, beispielsweise wie in WO 02/079341, WO 02/079293 und/oder in US 3,477,990 genannt, die hier diesbezüglich durch Bezugnahme aufgenommen werden, beispielsweise Bisphenol A, Bisphenol F oder deren Oxyethylierungs-, Hydrierungs- und oder Halogenierungsprodukte, oder hydroxylgruppenhaltige Polyester (Polyesterpolyole) oder -ether. Diese können auch z.B. als weitere Zusatzstoffe, beispielsweise in einer Komponente mit Wasser (beispielsweise entsprechender Härter), während in einer anderen Komponente organische Isocyanate vorhanden sind, vorliegen. Die zur Epoxidhärtung allgemein gebräuchlichen Di- oder Polyamine umfassen insbesondere aliphatische, cycloaliphatische und aromatische Di- oder Polyamine, Amidoamine, Aminaddukte, Mannichbasen, Polyamide und dergleichen. Beispiele finden sich in WO 02/079341 und WO 02/079293, beispielsweise Hydrazin, Niederalkandiamine, Phenylendiamin oder dergleichen. Di- oder Polythiole sind insbesondere di- oder höherfunktionale Thiole, beispielsweise die in WO 02/079341 und WO 02/079293 genannten Mercaptogruppen tragenden organischen Verbindungen, beispielsweise Dimercapto-α,ω-C₁-C₁₂-Alkane, 4,4'-dimercapto-dicyclohexylmethan, Dimercapto-diphenylmethan oder dergleichen.

Als Epoxide kommen übliche zwei oder mehr Oxirangruppen tragende organische Verbindungen in Betracht, beispielsweise solche, wie sie in WO 02/079341 und US 3,477,990 genannt sind, insbesondere die Polyglycidylether von di- oder mehrfunktionellen Alkoholen wie Bisphenol-A, Bisphenol-F, Novolaken, Glykolen, Glycerinen und dergleichen. Epoxide liegen in der betreffenden Komponente, falls vorhanden, beispielsweise in Mengen von bis zu 95 Gew.-%, insbesondere zwischen 20 und 70 Gew.-%, bezogen auf die jeweilige Komponente, vor.

Als gasbildender organischer Bestandteile finden organische Isocyanate, die bei der Reaktion mit Wasser in einer anderen Komponente nach dem Mischen Kohlendioxid freisetzen und so zur Bildung eines Gases führen, Verwendung. Zu den organischen Isocyanaten zählen insbesondere aliphatische, cycloaliphatische und/oder aromatische Di- oder Polyiosocyanate, oder Präpolymere mit zwei oder mehr Isocyanatogruppen, beispielsweise wie in WO 02/079341 und WO 02/079293 genannt, welche hier diesbezüglich durch Bezugnahme aufgenommen werden, beispielsweise Aryl-di- oder Aryl-polyisocyanate, insbesondere Toluoldiisocyanat, z.B. Toluol-2,4- oder -2-6-diisocyanat, Diisocyanatodiphenylmethan, insbesondere 4,4'-Methylen-bis(phenylisocyanat) (MDI), 4,4'-Isopropyliden-diphenylisocyanat, 2,4,4'-triisocyanato-diphenylmethan, Xylylol-1,3- oder -1,4-diisocyanat; oder Rohpolyisocyanate (herstellbar z.B. wie in Ullmann, Verlag Chemie, 4. Auflage, Band 19, S. 303-305, beschrieben, hier diesbezüglich durch Bezugnahme aufgenommen); oder Präpolymere mit zwei oder mehr Isocyanatogruppen; oder Gemische von zwei oder mehr der genannten Di- oder Polyisocyanate.

Die genannten organischen Isocyanate liegen vorzugsweise in einer Menge von bis zu 60 Gew.-%, vorzugsweise (falls vorhanden) in einer Menge zwischen 0,1 und 30 Gew.-%, bezogen auf die jeweilige Komponente, vor.

Als weitere Zusatzstoffe sind insbesondere Füllstoffe, Lösungsmittel, oberflächenaktive Additive, Beschleuniger, Katalysatoren, Thixotropiermittel und Inhibitoren zu nennen.

Füllstoffe sind insbesondere solche wie in WO 02/079341 und WO 02/079293 beschrieben, die hier diesbezüglich durch Bezugnahme aufgenommen werden, beispielsweise mineralische oder mineralähnliche Füllstoffe, wie Titandioxid, polymere Füllstoffe, hydraulisch härtbare Füllstoffe, Metalle, wie Aluminium, Ruß, Holz, mineralische oder organische Fasern, oder dergleichen, oder Gemische von zwei oder mehr davon. Die Füllstoffe können in beliebigen Formen vorliegen. Füllstoffe sind, soweit nicht abwesend, bezogen auf die Masse der jeweiligen Komponente vorzugsweise in einer Menge von insgesamt bis zu 85 Gew.-%, vorzugsweise von 5 bis 70 Gew.-% vorhanden.

Lösungsmittel (hier solche, die unter den Reaktionsbedingungen nicht sieden) können in einer oder mehrerer der Komponenten vorliegen, z.B. Dimethylacetamid, Xylole, Toluol, Phthalsäureester, Paraffine oder Wasser, oder Gemische davon. Lösungsmittel können beispielsweise in Mengen bis zu 20 Gew.-%, vorzugsweise, falls vorhanden, von 0,1 bis 15 Gew.-%, bezogen auf die Gesamtmenge der jeweiligen Komponente vorliegen.

Thixotropiermittel sind insbesondere gegebenenfalls organisch nachbehandelte pyrogene Kieselsäure, Bentonite, Alkyl- wie Methylcellulosen, Rhizinusölderivate oder dergleichen; diese liegen, bezogen auf die jeweilige Komponente, vorzugsweise in einem Gewichtsanteil bis zu 10 %, beispielsweise (falls vorhanden) zwischen 0,1 und 4 Gew.-%, vor.

Katalysatoren sind insbesondere geeignete Basen, wie insbesondere Diazabicyclo[2.2.2]oktan (DABCO); Diese Katalysatoren liegen beispielsweise in einer Menge von bis zu 10 Gew.-%, vorzugsweise, falls vorhanden, von 1 bis 5 Gew.-% bezogen auf die jeweilige Komponente vor.

Der Begriff "Härter" beinhaltet vor- und nachstehend reine Initiatoren oder phlegmatisierte Härter (Initiatoren im engeren Sinne) mit oder ohne Füllstoffzusatz und/oder Lösungsmittelzusatz, mit anderen Worten, die komplette Härterkomponente. Die Menge des Härters, bezogen auf die Masse der jeweiligen Komponente, liegt, sofern Härter in der jeweiligen Komponente vorliegt, im Bereich von 0,1 bis 60, vorzugsweise von 0,5 bis 50 Gew.-%. Der Härter kann in einer Komponente ohne härtbare Verbindungen frei vorliegen oder in geeigneter Weise, z.B. in mikroverkapselter Form, auch in einer Komponente mit härtbaren Verbindungen eingearbeitet sein.

Weitere Zusätze, wie Farbstoffe, Pigmente, Weichmacher, Stabilisatoren, Antistatikmittel, Verdickungsmittel oder dergleichen sind möglich, die in einer Menge von insgesamt bis zu 15 % vorliegen können, beispielsweise (falls vorhanden, von 0,1) bis zu 3%.

Von allen genannten Einzelbestandteilen einer Klasse (z.B. Füllstoffe, Härter, usw.) können auch jeweils Mischungen vorliegen, deren Einzelbestandteile jeweils zusammen die oben genannten beispielhaften oder bevorzugten Gewichtsanteile ergeben.

Die Verwendung des Kunstmörtels erfolgt insbesondere durch dessen Einbringung in die gewünschten Stellen, an denen Verankerungsmittel befestigt werden sollen, insbesondere Löcher, wie Bohrlöcher, in nicht oder noch nicht vollständig ausgehärteter Form und seine endgültige Aushärtung in situ, beispielsweise im Bohrloch. Dies gelingt durch Verwendung von Mehr-, insbesondere Zweikammersystemen (z.B. eine Kammer für Komponente A oder A**, die andere für B oder B**) mit leicht zerstörbaren Außenwandungen (beispielsweise Zwei- oder Mehrkammerpatronen, wie Ampullen, in denen eine Komponente und eine oder mehrere Ampullen mit einer oder mehreren anderen Komponenten vorliegen, oder Folienbeutel mit zwei oder mehr Kammern), wobei die Patronen oder Folienbeutel in die Löcher eingeführt und deren Außenwände dort durch Einbringen der Verankerungsmittel zerstört werden, und/oder durch Verwendung von Mehrkammer-, insbesondere Zweikammerkartuschen, in deren Kammern die Komponenten voneinander getrennt vorliegen und beispielsweise durch Herauspressen in einem Statikmischer zur Mischung gebracht und in das Loch eingeführt werden.

Nach Vermischen der Komponenten laufen die jeweiligen Reaktionen ab. Durch Vorhandensein von Inhibitoren und/oder Beschleunigern in einer oder mehreren Komponenten lässt sich der Zeitpunkt der Schaumbildung (durch verzögerte Reaktion, die nur zu verzögerter Kohlendioxidbildung durch Reaktion der Isocyanate mit Wasser) in geeigneter Weise einstellen, so dass Probleme mit einem frühzeitigen Aufschäumen vermieden werden können.

Neue Befestigungsverfahren, welche die Verwendung dieser Harze oder Kunstmörtel umfassen, sind insbesondere durch die in den vorstehenden beiden Absätzen genannten Verfahrensschritte gekennzeichnet. Die Befestigungsmittel, z.B. Anker, können bei
spielsweise durch Einschlagen, Drehen, Eindrücken oder Kombinationen davon eingebracht werden.

Einige bevorzugte Ausführungsformen der Erfindung finden sich in den abhängigen Ansprüchen, die hier durch Bezugnahme inkorporiert werden.

Ganz besonders bevorzugte Ausführungsformen der Erfindung finden sich in den nachfolgenden Beispielen. Diese dienen der Illustrierung der Erfindung, ohne sie einzuschränken.

### Referenz-Beispiel: Beispiel 1: 2-Komponenten-Schaummörtel (ungesättigte Bindungen beinhaltendes härtbares Harz) (nicht erfindungsgemäss)

**Schaummörtel A-Komponente**

| Bezeichnung des Bestandteils | Menge (Gew.-%) |
|---|---|
| Ethoxyliertes Bisphenol-A-dimethacrylat | 40 |
| Diphenylmetandiisocyanat | 15 |
| Kreide | 30 |
| Ethylenglykoldimethacrylat | 10 |
| pyrogene Kieselsäure | 2,5 |
| Oberflächenaktive Additive | 1 |
| Diethylanilin | 1,45 |
| Chinon | 0,05 |
| Summe | 100 |

**Schaummörtel B-Komponente**

| Bezeichnung des Bestandteils | Menge (Gew.-%) |
|---|---|
| BPO (33 % in Kreide) | 45 |
| Polyesterpolyol OHZ 230 auf Basis von Adipin- und Phthalsäure | 35 |
| Wasser | 8 |
| Oberflächenaktive (emulgierende oder stabilisierende) Additive | 6 |
| pyrogene Kieselsäure | 3 |
| Katalysator (DABCO) | 3 |
| Summe | 100 |

Gewichts-Verhältnis der Komponenten A : B = 5 : 1.

### Beispiel 2: 2-Komponenten-Schaummörtel (Epoxidharz) (erfindungsgemäss)

**Schaummörtel A-Komponente**

| Bezeichnung des Bestandteils | Menge (Gew.-%) |
|---|---|
| Bisphenol-A-diglycidylether | 31 |
| Diphenylmetandiisocyanat | 24 |
| Kreide | 36 |
| Neopentylglykoldiglycidylether | 4 |
| Oberflächenaktive Additive (polyalkylenoxidmodifizierte Siloxane) | 3 |
| Pyrogene Kieselsäure | 2 |
| Summe | 100 |

**Schaummörtel B-Komponente**

| Bezeichnung des Bestandteils | Menge (Gew.-%) |
|---|---|
| Polymercaptan, H-Äq. 200 | 82 |
| 2,2'-Dimorpholinyldiethylether | 6 |
| Polyetherpolyol, OHZ 56 | 3 |
| Oberflächenaktive Additive (polyalkylenoxidmodifizierte Siloxane) | 3 |
| pyrogene Kieselsäure | 2 |
| Wasser | 4 |
| Summe | 100 |

Gewichts-Verhältnis Komponente A : B = 2 : 1

### Beispiel 3: Kartusche

Die Komponenten A und B aus Beispiel 2 werden getrennt in die beiden Kammern einer Zweikammer-Kartusche abgefüllt.

### Beispiel 4: Doppelampulle

Komponente B aus Beispiel 2 wird in einer kleineren Ampulle abgefüllt und eingeschmolzen, diese wird zusammen mit Komponente B in eine größere Ampulle gefüllt und eingeschmolzen.

Beispiel 5: Eine Kartusche nach Beispiel 3, ausgestattet mit einem Statikmischer, oder eine Ampulle nach Beispiel 4 wird verwendet, um die beiden Mörtel-Komponenten in ein Bohrloch einzubringen, in dem ein Bolzen zur Befestigung einer Verkleidungsplatte mittels des Zweikomponentenmörtels befestigt wird.

## Patentansprüche

1. Verwendung eines Mehr-, insbesondere Zwei-Komponenten-Reaktionsmörtels zur Befestigung von Verankerungsmitteln in Löchern, wobei der Mehr-Komponenten-Reaktionsmörtel in die Löcher, an denen Verankerungsmittel befestigt werden sollen, eingebracht wird, wobei es sich bei dem Reaktionsmörtel um einen aufschäumbaren Mehr-Komponenten-Reaktionsmörtel handelt, wobei der Reaktionsmörtel **gekennzeichnet ist durch** die Anwesenheit einer oder mehrerer gasbildender organischer Bestandteile in einer oder mehreren der Komponenten, und **dadurch**, dass er
eine Komponente A, welche ein Epoxidharz und
eine Komponente B, welche eine mindestens zwei funktionelle Gruppen ausgewählt aus Hydroxy, Amino und Mercapto tragende organische Verbindung, insbesondere ein Di- oder Polyamin und/oder ein Di- oder Polythiol, beinhaltet,
enthält,
wobei separat oder in einer der genannten Komponenten ein oder mehrere Härter vorliegen, wobei der Härter in Falle des Vorliegens in einer Komponente mit härtbaren Bestandteilen in verkapselter Form vorliegt,
mit der Maßgabe, dass im Falle des Vorliegens des Epoxidharzes in Komponente A in Komponente B eine mindestens zwei funktionelle Gruppen ausgewählt aus Hydroxy, Amino und Mercapto tragende organische Verbindung, vorzugsweise ein Di- oder Polyamin und/oder ein Di- oder Polythiol vorliegen muss,
**dadurch** gekennzeichnet, dass in Komponente A als organischer gasbildender Bestandteil ein organisches Isocyanat vorliegt und in Komponente B oder, falls vorhanden, in einer weiteren Komponente Wasser vorhanden ist, was bei Mischung zur Freisetzung von Kohlendioxid führt, welches das gewünschte Aufschäumen bewirkt.

2. Verwendung nach Anspruch 1 eines Zwei-Komponenten-Reaktionsmörtels; bei dem folgende Komponenten vorliegen:
- eine Komponente A**, welche ein Epoxidharz umfasst, und
- eine Komponente B**, welche ein Di- oder Polyamin und/oder ein Di- oder Polythiol umfasst,
**dadurch gekennzeichnet, dass**
in Komponente A** als gasbildender organischer Bestandteil ein organisches Diisocyanat und in Komponente B** Wasser vorliegt, was bei Mischung zur Freisetzung von Kohlendioxid führt, welches das gewünschte Aufschäumen bewirkt; wobei das Gewichtsverhältnis von A** : B** vorzugsweise zwischen 10 : 1 und 1 : 10 liegt.

3. Verwendung nach einem der Ansprüche 1 bis 2 eines dort genannten aufschäumbaren Zwei-Komponenten-Reaktionsmörtels, wobei der Zwei-Komponenten-reaktionsmörtel in die Löcher, an denen Verankerungsmittel befestigt werden sollen, eingebracht wird unter Verwendung eines Zweikammersystems mit leicht zerstörbaren Außenwandungen, die in die Löcher eingeführt und deren Außenwände dort durch Einbringen von Verankerungsmitteln zerstört werden.

4. Verwendung nach einem der Ansprüche 1 bis 2 eines dort genannten aufschäumbaren Zwei-Komponenten-Reaktionsmörtels, wobei der Zwei-Komponenten-Reaktionsmörtel in die Löcher, an denen Verankerungsmittel befestigt werden sollen, eingebracht wird unter Verwendung von Zweikammerkartuschen, in deren Kammern die Komponenten voneinander getrennt vorliegen und durch Herauspressen zur Mischung gebracht und, gefolgt von oder parallel zu den Verankerungsmitteln, in das Loch eingeführt werden.

## Claims

1. Use of a multi-component, especially two-component, reactive mortar in fixing anchoring means in holes, the multi-component reactive mortar being introduced into the holes where anchoring means are to be fixed, the reactive mortar being an expandable multi-component reactive mortar, the reactive mortar being **characterised by** the presence of one or more gas-forming organic constituents in one or more of the components; and in that it comprises
a component A, which comprises an epoxy resin, and
a component B, which comprises an organic compound, especially a di- or poly-amine and/or a di- or poly-thiol, which compound carries at least two functional groups selected from hydroxy, amino and mercapto,
one or more hardeners being present separately or in one of the mentioned components, and, if present in a component having hardenable constituents, the hardener being present in encapsulated form,
with the proviso that, if the epoxy resin is present in component A, there must be present in component B an organic compound, preferably a di- or poly-amine and/or a di- or poly-thiol, which compound carries at least two functional groups selected from hydroxy, amino and mercapto,
**characterised in that** there is present in component A, as organic gas-forming constituent, an organic isocyanate and there is present in component B, or in a further component if present, water, which on mixing results in the liberation of carbon dioxide, which brings about the desired expanding.

2. Use, in accordance with claim 1, of a two-component reactive mortar; wherein the following components are present:
- a component A**, which comprises an epoxy resin, and
- a component B**, which comprises a di- or poly-amine and/or a di- or poly-thiol, **characterised in that**
in component A** there is present, as gas-forming organic constituent, an organic diisocyanate, and in component B** there is present water, which on mixing results in the liberation of carbon dioxide, which brings about the desired expanding; the weight ratio of A** : B** preferably being between 10: 1 and 1 : 10.

3. Use, according to one of claims 1 to 2, of an expandable two-component reactive mortar mentioned therein, wherein the two-component reactive mortar is introduced into the holes where anchoring means are to be fixed, using a two-chamber system having readily breakable outer walls which is introduced into the holes and the outer walls of which are broken therein by inserting anchoring means.

4. Use, according to one of claims 1 to 2, of an expandable two-component reactive mortar mentioned therein, wherein the two-component reactive mortar is introduced into the holes where anchoring means are to be fixed, using two-chamber cartridges, in the chambers of which the components are present separately from one another and are brought into admixture by being expelled and introduced into the hole followed by or in parallel with the anchoring means.

## Revendications

1. Utilisation d'un mortier de réaction à plusieurs composants, en particulier à deux composants, pour la fixation de moyens d'ancrage dans des trous, sachant que le mortier de réaction à plusieurs composants est introduit dans les trous où doivent être fixés les moyens d'ancrage, sachant que le mortier de réaction est un mortier de réaction moussable à plusieurs composants, sachant que le mortier de réaction est **caractérisé par** la présence d'un ou plusieurs constituants organiques de formation de gaz dans un ou plusieurs des composants, et par le fait qu'il contient
un composant A, qui comprend une résine époxy,
et un composant B, qui comprend un composé organique portant au moins deux groupes fonctionnels sélectionnés parmi les groupes hydroxyle, amino et mercapto, en particulier un di- ou polyamine et/ou un di- ou polythiol,
sachant qu'un ou plusieurs durcisseurs sont présents séparément ou dans un des composants précités, sachant que le durcisseur, dans le cas de sa présence dans un composant avec des constituants durcissables, est présent sous une forme encapsulée, étant entendu que, dans le cas de la présence de la résine époxy dans le composant A, un composé organique portant au moins deux groupes fonctionnels sélectionnés parmi les groupes hydroxyle, amino et mercapto, de préférence un di- ou polyamine et/ou un di- ou polythiol, doit être présent dans le composant B,
**caractérisée en ce qu'**un isocyanate organique est présent dans le composant A comme constituant organique de formation de gaz et de l'eau est présente dans le composant B ou le cas échéant dans un composant supplémentaire, ce qui conduit lors du mélangeage à la libération de dioxyde de carbone qui produit le moussage souhaité.

2. Utilisation selon la revendication 1 d'un mortier de réaction à deux composants dans lequel sont présents les composants suivants :
- un composant A**, qui comprend une résine époxy, et
- une composant B**, qui comprend un di- ou polyamine et/ou un di- ou polythiol,
**caractérisée en ce qu'**un diisocyanate organique est présent dans le composant A** comme constituant organique de formation de gaz et de l'eau est présente dans le composant B**, ce qui conduit lors du mélangeage à la libération de dioxyde de carbone qui produit le moussage souhaité, sachant que le rapport de poids de A** à B** est de préférence compris entre 10 : 1 et 1 : 10.

3. Utilisation selon l'une des revendications 1 à 2 d'un mortier de réaction moussable à deux composants mentionné dans celles-ci, sachant que le mortier de réaction à deux composants est introduit dans les trous où doivent être fixés des moyens d'ancrage en utilisant un système à deux compartiments avec des parois extérieures facilement destructibles, qui est introduit dans les trous et dont les parois extérieures y sont détruites par l'introduction des moyens d'ancrage.

4. Utilisation selon l'une des revendications 1 à 2 d'un mortier de réaction moussable à deux composants mentionné dans celles-ci, sachant que le mortier de réaction à deux composants est introduit dans les trous où doivent être fixés des moyens d'ancrage en utilisant des cartouches à deux compartiments, dans les compartiments desquelles les composants sont présents séparés l'un de l'autre, et sont mélangés par exprimage et introduits, suivis par les moyens d'ancrage ou en parallèle avec eux, dans le trou.
